# EUROPEAN PATENT APPLICATION

(11) **EP 1 665 943 A1**
(43) Date of publication of application: **07.06.2006**
(21) Application number: 04772578.3
(22) Date of filing: 01.09.2004
(51) Int. Cl.: A23N 12/10

(54) **ROASTER FOR POWDER AND GRANULAR MATERIAL**

(30) Priority: 10.09.2003 JP 2003318093; 10.09.2003 JP 2003318095
(71) Applicant: Tsukasa industry Co. Limited, Handa-shi, Aichi 475-8550 (JP)
(72) Inventor: KATO, Fumio, c/o TSUKASA INDUSTRY CO., LTD., Handa-shi, Aichi 4758550 (JP)
(74) Representative: Mills, Julia
(86) International application number: PCT/JP2004/012622
(87) International publication number: WO 2005/025340

(57) **Abstract**

A roaster for powder and granular material capable of effectively roasting powder and granular material to the inside thereof to provide high quality powder and granular material and capable of effectively avoiding the possibility of causing contamination since the possibility of dewing is less even if the material is cooled. The roaster 1 comprises an charging port 2 in which the powder and granular material is thrown, a drum 30 in which the powder and granular material thrown from the charging port 2 is stored, and a heating unit 49 heating the powder and granular material stored in the drum 30. A preheating chamber 3 in which the powder and granular material thrown from the charging port 2 is preliminarily heated and which communicates with the drum 30 is formed between the charging port 2 and the drum 30.

## Description

This application is based on Japanese patent application No. 2003-318093 & 2003-318095 the content of which is incorporated hereinto by reference.

### DISCLOSURE OF THE INVENTION

### Field of the Invention

The present invention relates to a roaster for powder and granular material used for roasting powder of coffee bean, tea leaf, cereals and so forth.

### Related Art

It is a general practice for manufactures of powders of coffee bean, tea leaf and so forth to roast a large amount of powder using a roaster for powder and granular material, because some kinds of the powders can add aroma and taste by being preliminarily roasted. A conventional roaster for powder and granular material will now be explained referring to, for example, a coffee bean roaster (simply referred to as a "roaster", hereinafter) used for roasting coffee bean (or powder thereof). The roaster is roughly composed of a drum having on the top portion thereof an opening through which coffee beans (or powder thereof) are charged, a burner heating the drum from the lower side thereof, and a blade stirring the powder housed in the drum. As another example of the roaster, a tea leaf roaster used for roasting tea leaves (or powder thereof) is roughly composed of a horizontally disposed drum having on one end thereof a charging port through which the powder is charged into the drum, and having on the other end thereof a discharge section through which the roasted powder is discharged, a driving device rotating the drum, and a heating device heating the powder housed in the drum. Using these roasters, coffee beans and tea leaves (or powders thereof) are roasted by the burner and the heating device, wherein the coffee bean roaster discharges the roasted coffee beans again through the opening, and the tea leaf roaster discharges the roasted powder from the discharge section.

For ideal roasting, each powder preferably has a predetermined moisture content (for example, rice bran preferably has a moisture content of less than 2% or around), whereas in the above-described conventional roasters, the powder (of coffee beans, tea leaves or the like) is charged through the opening or charging port into the drum and housed therein, and is directly roasted without being adjusted to a predetermined moisture content (low moisture content), so that every grain of the powder is often roasted in black only on the surface thereof, rather than being well roasted to the core portion, only to give aroma and taste inferior to those reasonably required for the powder. In addition, the tea leaf roaster, upon being cooled by the external air, tends to cause dewing on the surface of the drum and the blade due to moisture emitted from the powder during the roasting, which may cause contamination.

### SUMMARY OF THE INVENTION

The present invention was proposed in order to solve the problems in the above-described conventional roaster for powder and granular materials, aiming at providing a roaster for powder and granular material capable of efficiently roasting every grain of the powder to its core portion to thereby make the powder a high-quality one, and of effectively avoiding a risk of dewing, which is causative of contamination, even under cooling.

The present invention was proposed in order to solve the above-described problems, wherein the first invention (described in Claim 1) provides a roaster for powder and granular material which include a charging port through which powder is charged; a drum housing the powder charged through the charging port; and a heating unit heating the powder housed in the drum; wherein a preheating chamber which preheats the powder charged through the charging port, and communicates with the drum, is provided between the charging port and the drum.

The second invention (described in Claim 2) provides the roaster for powder and granular material described in the first invention, wherein the preheating chamber has a powder support member supporting the powder charged through the charging port, and having a large number of through-holes; a hot air supply unit supplying hot air from the lower side of the powder support member; and an exhaust unit discharging the air in the preheating chamber out into the external.

The third invention (described in Claim 3) provides the roaster for powder and granular material described in the first or second invention, wherein the hot air supplied by the hot air supply unit to the preheating chamber is an air heated by a heating unit heating the powder housed in the drum.

The fourth invention (described in Claim 4) provides the roaster for powder and granular material described in any of the first, second and third inventions, wherein the drum is supported by a plurality of rotating components in a rotative manner, all of or a part of the rotating components having a plurality of stepped portions formed thereon by which the drum is agitated.

The fifth invention (described in Claim 5) provides the roaster for powder and granular material described in the fourth invention, wherein the drum has a flange portion on the outer circumference thereof, each of the rotating components has a groove allowing the flange portion to be inserted therein, and the stepped portion is formed either on the outer circumferential surface of the flange portion or on the ring-formed outer circumferential surfaces in the groove of the rotating components on which the flange portion inserted in the groove is rolled.

The sixth invention (described in Claim 6) provides the roaster for powder and granular material described in the fourth or fifth invention, wherein the rotating components are configured by a first and a second rotating components disposed on one lower lateral side of the drum and coupled with each other through one coupling axis, and a third and fourth rotating components disposed on the other lower lateral side of the drum and coupled with each other through the other coupling axis in parallel with the one coupling axis, and the stepped portions are formed on both of the first and the second rotating components disposed ahead in the direction of movement of the powder housed in the drum caused by rotation thereof, or on both of the third and fourth rotating components,.

In the first invention (described in Claim 1), there is formed a preheating chamber, which preheats the powder charged through the charging port and communicates with the drum, between the charging port and the drum, so that it is made possible to lower moisture content of the powder in the preheating chamber, and thereby every grain of the powder passed through the preheating chamber is uniformly roasted to the core in an extremely effective manner in the drum, and to avoid a result that only the surface is scorched in black. Because the moisture content in the drum is kept low even when the roaster for powder and granular material is cooled, it is also made possible to sufficiently suppress the internal dewing, and to avoid a risk of causing contamination.

In the second invention (described in Claim 2), the powder charged through the charging port and supported on the support member is heated by hot air coming through a large number of through-holes formed in the support member. In other words, the powder is heated by the hot air blowing upward from under the support member. The second invention can, therefore, preheat the powder in a costless and extremely efficient manner without using a special stirring device or driving device. Because the second invention is provided with the exhaust unit discharging the air in the preheating chamber, it is also made possible to keep a low moisture content not only in the drum but also in the preheating chamber even when the roaster for powder and granular material is cooled, and to further suppress the dewing inside the roaster for powder and granular material, and to avoid a risk of causing contamination in a more effective manner.

In the third invention (described in Claim 3), the hot air supplied to the preheating chamber by the hot air supply unit is an air heated by a heating unit heating the powder housed in the drum, and is not a heating unit provided separately from that used for heating the powder housed in the drum, so that it is made possible to effectively use energy for heating, and to reduce the running cost as compared with the conventional roaster for powder and granular material.

In the fourth invention (described in Claim 4), the drum is supported by a plurality of rotating components in a rotative manner, wherein all of, or a part of the rotating components have a plurality of stepped portions formed thereon by which the drum is agitated, so that every grain of the powder housed in the drum can uniformly be roasted over the entire surface with the aid of agitation of the drum. It is not always necessary for all of the rotating components to have the stepped portion formed thereon, and instead only a part of the rotating components may be configured as having the stepped portion by which the drum is agitated.

According to the fifth invention (described in Claim 5), it is made possible not only to uniformly roast the powder while allowing the drum to roll as the rotating components rotate so as to agitate the drum, and thereby allowing the powder housed therein to agitate, but also to rotate the drum in an extremely stable and continuous manner without causing displacement of the drum due to agitation applied by the rotating components during the rotation of the drum, because the drum is supported by the rotating components as being inserted in the groove formed on the rotating components.

In the sixth invention (described in Claim 6), the stepped portion is formed on both of the first and said second rotating components disposed ahead in the direction of movement of the powder housed in the drum caused by rotation thereof, or on both of the third and fourth rotating components, so that a portion of a powder moved from the position right under the center of the drum ahead in the direction of rotation releases from the inner circumferential surface of the drum under agitation caused by the stepped portion, and returns back to the position right under the center. In other words, according to the sixth invention, motion of the powder in the drum is just like a food (such as Chinese fried rice) cooked on a frying pan which is shaken by a cook over the fire so as to toss the food at the far end of the frying pan and to return it back to the cook's side. The sixth invention therefore makes it possible to roast every grain of the powder in a more uniform manner.

### BRIEF DESCRIPTION OF THE DRAWINGS

The above and other objects, advantages and features of the present invention will be more apparent from the following description taken in conjunction with the accompanying drawings, in which:
FIG. 1 is a front view of a coffee bean roaster;
FIG. 2 is a side view showing a part of the internal structure of the coffee bean roaster;
FIG. 3 is a left side view of the coffee bean roaster;
FIG. 4 is a left sectional side elevation of the coffee bean roaster;
FIG. 5 is a plan view of the coffee bean roaster;
FIG. 6 is a exploded perspective view showing a support structure of a drum;
FIG. 7 is a sectional side elevation showing the support structure of the drum;
FIG. 8 is a perspective view showing an axis of rotation and beaters; and

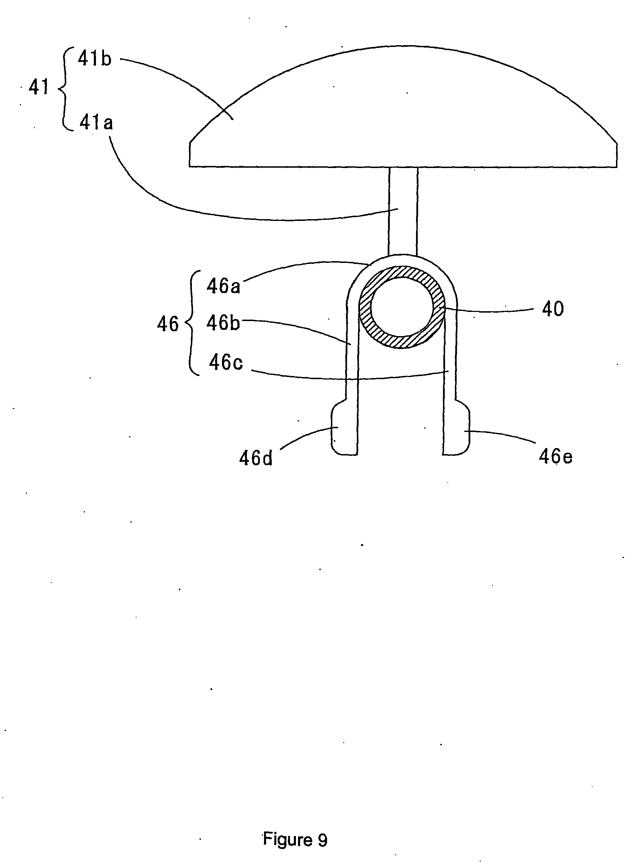

FIG. 9 is a sectional side elevation showing the axis of rotation and one beater.

### DETAILED DESCRIPTION OF THE PREFERRED EMBODIMENTS

The invention will be now described herein with reference to illustrative embodiments. Those skilled in the art will recognize that many alternative embodiments can be accomplished using the teachings of the present invention and that the invention is not limited to the embodiments illustrated for explanatory purposes.

A roaster for powder and granular material according to the first embodiment of the present invention will be detailed below, referring to the attached drawings. The roaster for powder and granular material of this embodiment is one applied form of the present invention as a coffee bean roaster (simply referred to as a "roaster", hereinafter) roasting mill-ground powder of coffee beans.

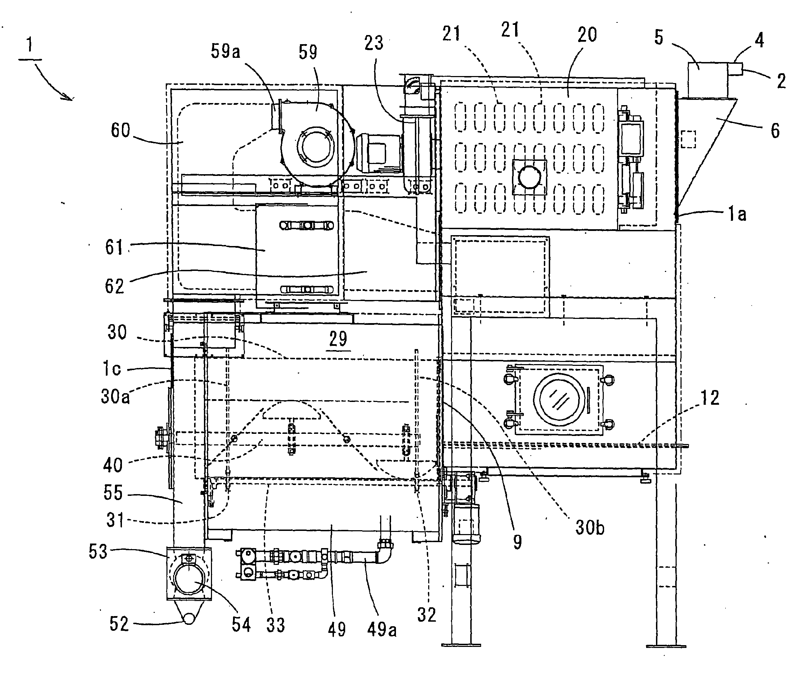

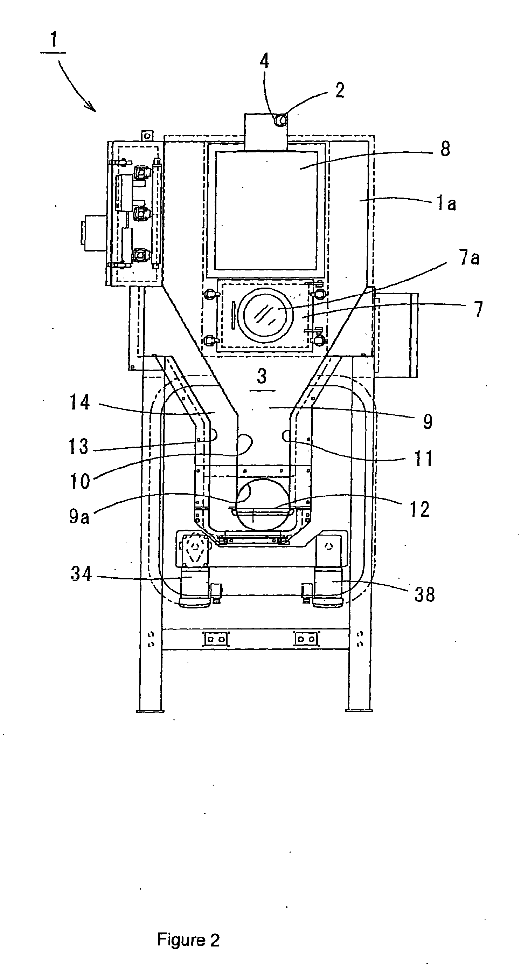

As shown in FIG. 1, the roster 1 has a charging port 2 through which coffee beans (powdered: the same will apply also hereinafter) are charged, and the charging port 2 communicates with the preheating chamber 3. The charging port 2 is a portion connected to the end of a flexible pipe not shown, through which the coffee beans are introduced together with an compressed air. The charging port 2 is also molded as a pipe, and is formed on a connection member 4 to which the end of the non-illustrated flexible pipe is connected. The connection member 4 is fixed, as shown in FIG. 1, on the side face of a cylinder 5 having a closed top. The cylinder 5 is fixed on the right side plate 1a of the roaster 1, while placing therebetween a metal attachment 6 having a down-pointing-triangle shape in the front view, and having a slide plate portion (reference numeral omitted) formed on the left surface side. The internal of the cylinder 5 and the internal of the metal attachment 6 are communicated with each other, and also the metal attachment 6 and the preheating chamber 3 are communicated. On the right side plate 1a of the roaster 1, an open/close lid 7 is provided in a detachable manner as shown in FIG. 2, on the lower side of the position of placement of the metal attachment 6. The open/close lid 7 has a circular see-through window 7a made of a transparent material such as glass, which is fixed at the center thereof, so as to allow the user to confirm whether the coffee beans are properly introduced therein or not.

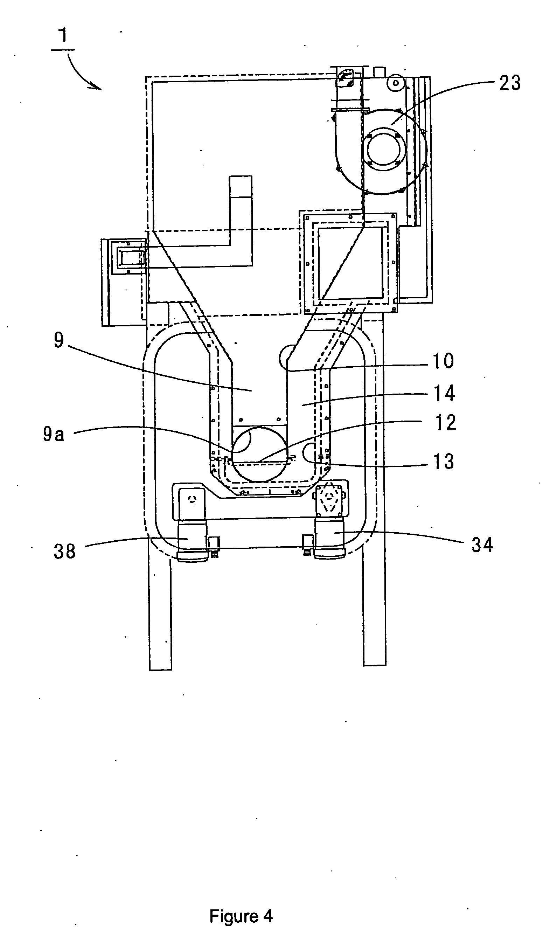

Inside the roaster 1, there is provided the preheating chamber 3 so as to extend from the near-center of the roaster 1 towards the right side plate 1a side. The preheating chamber 3 is formed using a partition plate 9 partitioning the preheating chamber 3 from a later-described main heating chamber having a drum disposed therein; a front side partition plate 10 (see FIG. 2 or FIG. 4) having the left end thereof fixed to the partition plate 9 and the right end thereof fixed to the right side plate 1a; a rear side partition plate 11 disposed behind the front side partition plate 10, having the left end thereof fixed to the partition plate 9 and the right end thereof fixed to the right side plate 1a; the right side plate 1a; and a support plate 12 on which the coffee beans are supported. The support plate 12 is a support member composing the present invention, having a shape of laterally-long rectangular plate, and is configured as a punched metal having a large number of through-holes, not shown, formed therein. The large number of through-holes formed in the support plate 12 has a diameter smaller than the diameter of the coffee beans (or powder or grain thereof) so as to prevent the coffee beans from dropping therethrough under the support plate 12. The lower end of the front partition plate 10 is fixed to the front side end portion of the support plate 12, and the lower end of the rear side partition plate 11 is fixed to the rear side end portion of the support plate 12. The middle portion of the right end side of the support plate 12 is fixed to the right side plate 1a and further projects rightward out therefrom as shown in FIG. 1.

On the side more closer to the front (this side) than the front of the front side partition plate 10, there is fixed a guide plate 13 guiding, in cooperation with the partition plate 10, the hot air to the lower side of the support plate 12. More specifically, a hot air passageway 14 guiding the hot air to the lower side of the support plate 12, which is composed of the front side partition plate 10 and the guide plate 13, is formed on the front side of the preheating chamber 3. Inside the roaster 1 and above the preheating chamber 3, there is provided a dust collector 20 as shown in FIG. 1. The dust collector 20 is roughly composed of a large number of bag filters 21 and a ventilating fan 23, and thereby the roaster 1 is configured so that the air in the preheating chamber 3 is discharged out into the air after being passed through such large number of bag filters 21, with the aid of operation of the ventilation fan 23. More specifically, the hot air flowing into the lower portion of the support plate 12 through the hot air passageway 14 formed by the front side partition plate 10 and the guide plate 13 further enters the preheating chamber 3 through the large number of through-holes formed in the support plate 12 (so as to be blown upward), and emitted out into the air after being passed through such large number of bag filters 21. In this process, the coffee beans coming through the charging port 2 into the roaster 1 are supported on the top surface of the support plate 12, and are heated by the hot air blown up from the lower side. The coffee beans (or powder or grain thereof) are trapped on the outer circumferential surface of the bag filters 21, without being emitted outside the roaster 1.

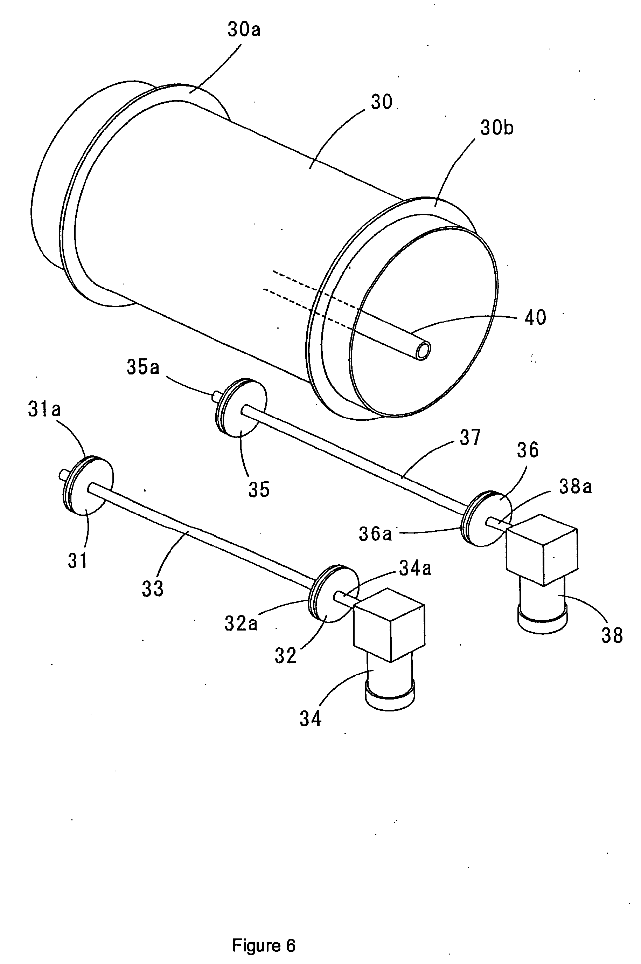

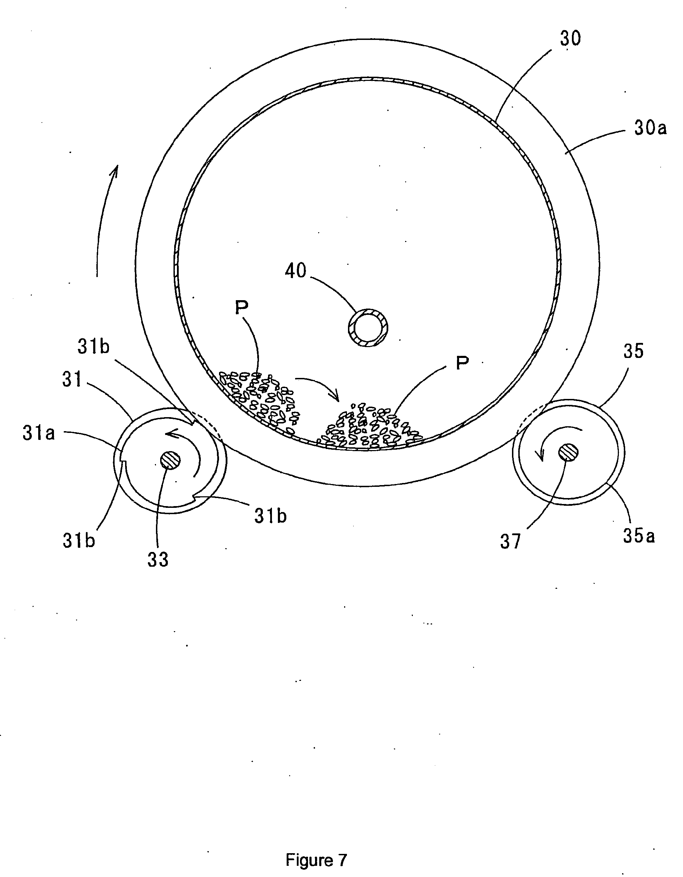

On the left side of the portion of placement of the preheating chamber 3, there is formed a main heating chamber 29 while placing the partition plate 9 in between, and a drum 30 is disposed in the main heating chamber 29. The drum 30 is molded as a laterally-elongated cylinder as shown in FIG. 6, having both ends thereof opened. One flange portion 30a is formed on the outer circumference of the drum 30 at a portion set back from the left end thereof, and the other flange portion 30b is formed on the outer circumference at the position set back from the other end. On the left end side of the drum 30 and at a position slightly closer to the front side as viewed from the just-under position, there is disposed a first rotating component 31 supporting the drum 30. On the right end side of the drum 30 and at a position slightly closer to the front side as viewed from the just-under position, there is disposed a second rotating component 32. The second rotating component 32 is connected to the first rotating component 31 by a horizontal shaft 33, and is also connected with a drive shaft 34a of a first drive motor 34. On the left end side of the drum 30 and at a position slightly closer to the rear side as viewed from the just-under position, there is disposed a third rotating component 35. On the right end side of the drum 30 and at a position slightly closer to the rear side, there is disposed a fourth rotating component 36. The fourth rotating component 36 is connected to the third rotating component 35 by the other horizontal shaft 37 provided in parallel with one horizontal shaft 33, and is also connected with a drive shaft 38a of a second drive motor 38. The roaster 1 herein is configured so that the first drive motor 34 and the second drive motor 38 rotate in synchronization with each other. The first to fourth rotating components 31, 32, 35 and 36 have ring-formed recessed grooves 31a, 32a, 35a and 36a, respectively. The drum 30 is supported by the first to fourth rotating components 31, 32, 35 and 36 in such a way that one flange portion 30a formed on the drum 30 is inserted into the recessed groove 31a formed on the first rotating component 31 and into the recessed groove 35a formed on the third rotating component 35, and that the other flange portion 30b formed on the drum 30 is inserted into the recessed groove 32a formed on the second rotating component 32 and into the recessed groove 36a formed on the fourth rotating component 36. Each of the ring-formed surfaces (portion in contact with each of the circumferential surfaces of one and the other flanged portions 30a, 30b), composing each of the individual recessed grooves 31a, 32a formed on each of the first rotating component 31 and the second rotating component 32, has a plurality of stepped portions 31b formed thereon, as shown in FIG. 7. In the roaster 1 of this embodiment, the third and the fourth rotating components 35, 36 have no stepped portion formed thereon. The partition plate 9 has a circular opening 9a formed therein as shown in FIG. 2. The coffee beans are introduced through the opening 9a into the drum 30, while being heated by the hot air blown upward from the lower side of the support plate 12 in the preheating chamber 3. The drum 30 housing the coffee beans rotates as the first to fourth rotating components 31, 32, 35 and 36 rotate, as being driven by the first and second drive motors 34, 38.

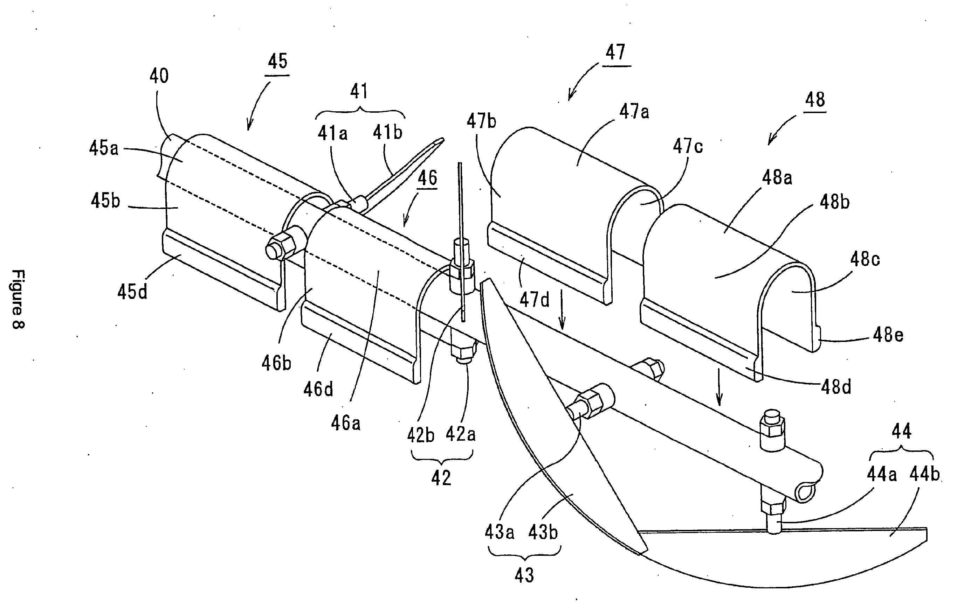

At a position slightly lower than the center of the drum 30, there is disposed a rotary shaft 40 in the horizontal direction as shown in FIG. 1. The rotary shaft 40 is molded as a pipe, the right end thereof is supported by a non-illustrated right bearing in a rotative manner, and the portion set back from the left end is supported by a non-illustrated left bearing in a rotative manner, and the left end is projected out from a left side plate 1c of the roaster 1. To the rotary shaft 40, first to fourth beaters 41 to 44 are sequentially fixed at regular intervals from one end to the other end of the rotary shaft 40. The first to fourth beaters 41 to 44 are respectively composed of, as shown in FIG. 8, axes 41a to 44a fixed normal to the longitudinal direction of the rotary shaft 40, and nearly hemicircular stirring blades 41b to 44b formed at the ends of the axes 41a to 44a. Positions of fixation of the first beater 41 and the second beater 42 are tilted from each other by 90° as viewed from one end to the other end of the rotary shaft 40, and each of the individual stirring blades 41b to 44b is twisted 40° to the rotary shaft 40. A non-illustrated third drive motor is fixed on the left side plate 1c of the roaster 1, and the drive shaft of the third drive motor is coupled with the rotary shaft 40 by a non-illustrated chain belt. In this configuration, as the rotary shaft 40 rotates as being driven by the third drive motor, the coffee beans are stirred and moved from the right side towards the left side of the drum 30 by the first to fourth beaters 41 to 44. The rotary shaft 40 has also first to fourth reflection members 45 to 48 supported thereon. The first reflection member 45 is disposed next to the first beater 41 on the side more closer the to the left side plate 1c, the second reflection member 46 is disposed between the first beater 41 and the second beater 42, the third reflection member 47 between the second beater 42 and the third beater 43, and the fourth reflection member 48 between the third beater 43 and the fourth beater 44. The first to fourth reflection members 45 to 48 are respectively composed of curved portion 45a to 48a curved arch-wise, each of the back surface of which being placed on the outer circumferential surface of the rotary shaft 40, front drooped plate portions 45b to 48b continued from the curved portions and drooping on the front side of the rotary shaft 40, and the opposite drooped plate portions 45c to 48c continued from the curved portions and drooping on the rear side of the rotary shaft 40 so as to oppose with the front drooped plate portions 45b to 48b, respectively. The front drooped plate portions 45b to 48b and the opposite drooped plate portions 45c to 48c have, on the lower end portions thereof, thickened portions 45d to 48d, and 45e to 48e, respectively.

As shown in FIG. 1, on the lower side of the drum 30, there is disposed a gas burner 49 as a heating unit composing the present invention. The gas burner 49 is connected through a piping 49a to a non-illustrated gas supply unit, and is provided for heating the coffee beans housed in the drum 30 disposed and rotating thereabove. On the left side of the drum 30, there is disposed a rotary valve 53 through which the coffee beans roasted in the drum 30 are discharged out of the roaster 1, which are then transferred through a piping 52 to elsewhere. On the left side of the drum 30, there is also disposed a discharge path 55 allowing the coffee beans discharged out from the left end of the drum 30 to pass therethrough to reach the rotary valve 53. The rotary valve 53 has, as constituents thereof, a non-illustrated inlet port formed on the top portion thereof, allowing the roasted coffee beans to flow therethrough, a case 53a formed on the lower portion thereof, having a discharge port through which the coffee beans are discharged and being connected to the piping 52, and a non-illustrated main valve unit housed in the case 53a, and rotating as being driven by the fourth drive motor 54 . The main valve unit has a plurality of housing chambers formed thereon, into which the coffee beans coming through the inlet port are housed. The coffee beans flowing through the inlet port into the housing chambers on the main valve unit are forced to move to the discharge port as being driven by the fourth drive motor 54, and then drop into the piping 52.

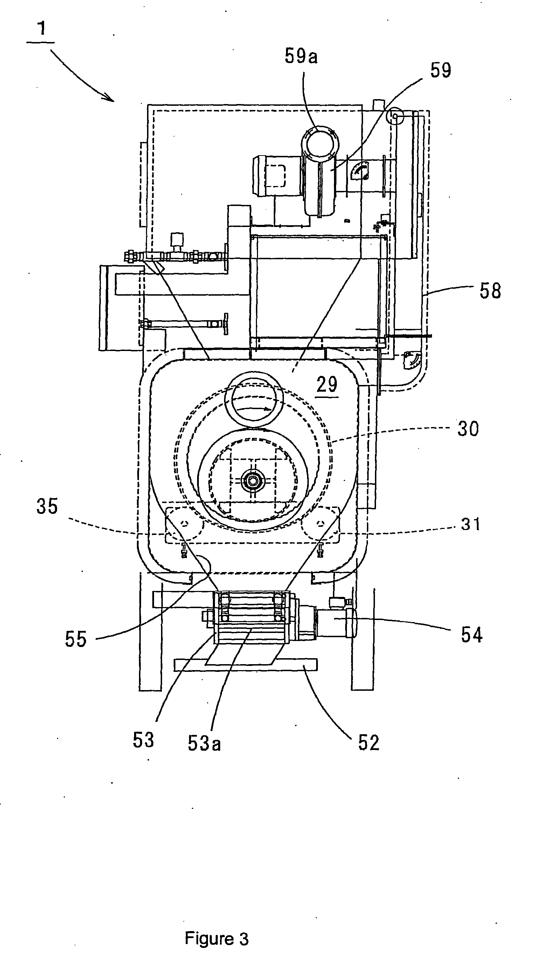

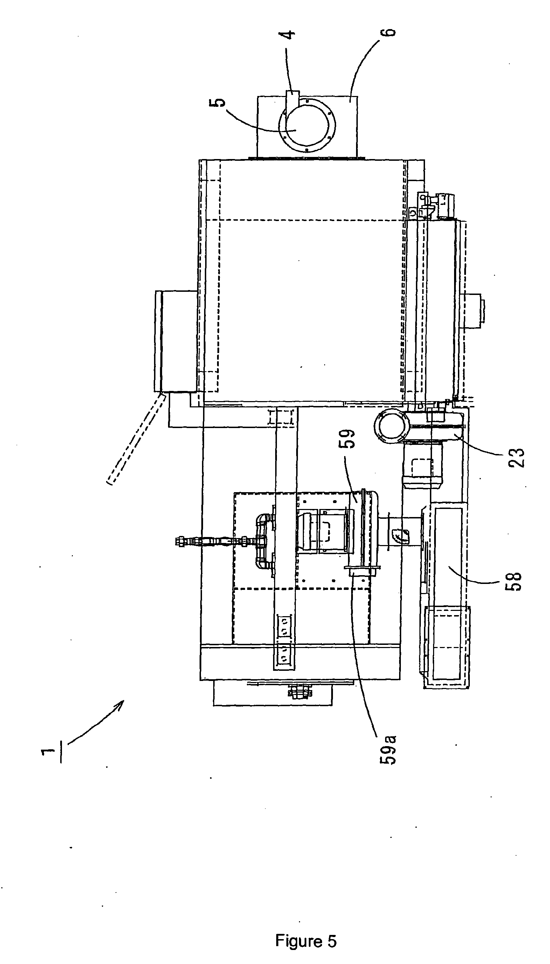

To the main heating chamber 29 having the drum 30 disposed therein, as shown in FIG. 3, there is fixed one end of a first duct 58 through which the air (heated air) in the main heating chamber 29 is introduced, and on the opposite end of the first duct 58, there is disposed an intake fan 59. The first duct 58 is connected to a non-illustrated intake port formed on the intake fan 59 as shown in FIG. 3 and FIG. 5. To an outlet port 59a of the intake fan 59, as shown in FIG. 1, there is connected one end of a second duct 60, and the other end of the second duct 60 is connected to an auxiliary heater 61. The auxiliary heater 61 is further connected with the hot air passageway 14 composed of the above-described front side partition plate 10 and the guide plate 13, shown in FIG. 2, while placing a third duct 62 in between. More specifically, the roaster 1 is configured so as to allow the hot air in the main heating chamber 29 to reach the hot air passageway 14 through the first duct 58, the second duct 60 and the third duct 62, and then to flow into the preheating chamber 3 in a blown-up manner from the lower side of the support plate 12, through a large number of through-holes formed in the support plate 12.

Operations of the above-described roaster 1 of this embodiment will be described below. The coffee beans charged through the charging port 2 with the aid of pneumatic transportation pass through the cylinder 5 and the metal attachment 6 to reach the preheating chamber 3, and supported on the support plate 12. The hot air flows into the preheating chamber 3 (in a blown-up manner) from the lower side of the support plate 12 , after passing through a large number of through-holes formed in the support plate 12. The coffee beans in the preheating chamber 3, under heating and drying by the hot air, are then thrown through the opening 9a formed in the partition plate 9 into the drum 30 rotating in the main heating chamber 29. The coffee beans thrown into the drum 30 are stirred by rotation of the drum 30 and the rotation of the first to fourth beater 41 to 44, and at the same time, gradually moved towards the left side of the roaster 1, while being tossed up and down over a short range in the drum 30 which rolls with the aid of the first and the second rotating components 31, 32, while being vibrated on the plurality of stepped portions formed thereon. More specifically, when the first to fourth rotating components 31, 32, 35 and 36 rotate counter-clockwisely, for example, the drum 30 rotates clockwisely with the aid of these first to fourth rotating components 31, 32, 35 and 36, as shown in FIG. 7. The coffee beans P, which is a powder housed in the drum 30, move ahead in the direction of rotation of the drum 30 as viewed from the position just under the center of rotation of the drum 30, but thus forwarded coffee beans P are then forced to move back to the just-under position of the center of the drum 30 while being slightly tossed, when the drum 30 is vibrated with the aid of the steeped portions 31b formed on the first and the second rotating components 31, 32. In such repetitive motion and with the aid of the first to fourth beaters 41 to 44, the coffee beans P are forced to move from the right to left under stirring. Because the gas burner 49 is disposed as the heating unit under the drum 30, the coffee beans preheated in the preheating chamber 3 are fully roasted (heated) in the drum 30. The rotary shaft 40 has the reflection members 45 to 48 disposed thereon, so that heat from the gas burner 49 is reflected on the inner surfaces of the first to fourth reflection members 45 to 48, and radiated towards the coffee beans P side in a focused manner. The roasted coffee beans P pass through the discharge path 55, and are transferred by the rotary valve 53 to the piping 52. The air heated by the gas burner 49 flows from the main heating chamber 29 through the first duct 58, the second duct 60 and the third duct 62 to reach the hot air passageway, and then flows into the preheating chamber 3 from the lower side of the supporting plate 12 (in a blown-up manner), after passing through a large number of through-holes formed in the supporting plate 12.

As described in the above, the roaster 1 of this embodiment preheats and dries the coffee beans in the preheating chamber 3, before roasting them in the drum 30 disposed in the main heating chamber 29, and can effectively roast the coffee beans as the powder to the cores in the drum 30, so that it is made possible to provide coffee beans of an extra-high quality. In particular, the preheating in the roaster 1 is effected by the hot air blown upward from the lower side of the support plate 12, so that there is no fear of causing non-uniform preheating. Because the moisture content in the drum 30 is kept low even when the roaster 1 is cooled by virtue of such preheating in the preheating chamber 3, it is also made possible to sufficiently suppress the dewing in the roaster 1, and to effectively avoid a risk of causing contamination. In particular, because the air in the preheating chamber 3 is discharged to the external with the aid of the ventilating fan 23, the roaster 1 can suppress the contamination in a more effective manner.

Because the air supplied to the preheating chamber 3 is an air heated by the gas burner 49 in the main heating chamber 29, energy of the gas burner 49 can effectively be used, demonstrating a large energy-saving effect. Again because the auxiliary heater 61 is disposed midway of the route along which the hot air in the main heating chamber 29 is supplied to the preheating chamber 3, it is allowable to activate the auxiliary heater 61 when the temperature of the hot air to be supplied to the preheating chamber 3 is low, due to use in the wintertime, or in cold regions.

In particular in the roaster 1 of this embodiment, as described in the above, the stepped portions composing the present invention are formed only on the first and the second rotating components 31, 32 disposed on one side of the drum 30 (the rotating components disposed ahead in the direction of movement of the powder (coffee beans P) in the drum 30 under rotation), and are not formed on the third and the fourth rotating component 35, 36 disposed on the opposite side, so that motion of the coffee beans P housed in the drum 30 is just like a food (such as Chinese fried rice) cooked on a frying pan which is shaken by a cook over the fire so as to toss the food at the far end of the frying pan and to return it back to the cook's side. The roaster 1 can therefore heat every grain of coffee beans in a more uniform manner over the entire surface thereof.

While the roaster 1 of this embodiment described in the above is such as used for roasting the coffee beans P as the powder, the roaster for powder and granular material of the present invention is, of course, not limited to those roasting the coffee beans P, allowing those used for roasting any powder composed of tea leaf, rice bran or various cereals. The roaster 1 described in the above uses the gas burner as the heating unit composing the present invention, whereas any other heating units such as electric heater can be used so far as they can roast the powder housed in the drum.
It is apparent that the present invention is not limited to the above embodiments, that may be modified and changed without departing from the scope and spirit of the invention.

- 1: coffee bean roaster
- 2: charging port
- 3: preheating chamber
- 9: partition plate
- 9a: opening
- 12: support plate
- 14: hot air passageway
- 29: main heating chamber
- 30: drum
- 49: gas burner
- 38: first duct
- 59: exhaust fan
- 60: second duct
- 62: third duct

## Claims

1. A roaster for powder and granular material comprising:
a charging port through which powder is charged;
a drum housing the powder charged through said charging port; and
a heating unit heating the powder housed in said drum;
wherein a preheating chamber which preheats the powder charged through said charging port, and communicates with said drum, is provided between said charging port and said drum.

2. The roaster for powder and granular material as claimed in Claim 1, wherein said preheating chamber comprises:
a powder support member supporting the powder charged through said charging port, and having a large number of through-holes;
a hot air supply unit supplying hot air from the lower side of said powder support member; and
an exhaust unit discharging the air in said preheating chamber out into the external.

3. The roaster for powder and granular material as claimed in Claim 1 or 2, wherein the hot air supplied by said hot air supply unit to said preheating chamber is an air heated by a heating unit heating the powder housed in said drum.

4. The roaster for powder and granular material as claimed in any one of Claims 1 to 3, wherein said drum is supported by a plurality of rotating components in a rotative manner, all of or, a part of said rotating components having a plurality of stepped portions formed thereon by which said drum is agitated.

5. The roaster for powder and granular material as claimed in Claim 4, wherein said drum has a flange portion on the outer circumference thereof, each of said rotating components has a groove allowing said flange portion to be inserted therein, and said stepped portion is formed either on the outer circumferential surface of said flange portion or on the ring-formed outer circumferential surfaces in the groove of said rotating components on which the flange portion inserted in said groove is rolled.

6. The roaster for powder and granular material as claimed in claim 4 or 5, wherein said rotating components are configured by a first and a second rotating components disposed on one lower lateral side of said drum and coupled with each other through one coupling axis, and a third and a fourth rotating components disposed on the other lower lateral side of said drum and coupled with each other through the other coupling axis in parallel with said one coupling axis, and said stepped portions are formed on both of said first and said second rotating components disposed ahead in the direction of movement of the powder housed in said drum caused by rotation thereof, or on both of said third and fourth rotating components.
